Europäisches Patentamt

European Patent Office

Office européen des brevets

(11) Numéro de publication: **0 020 317**
A1

(12) # DEMANDE DE BREVET EUROPEEN

(21) Numéro de dépôt: **80870026.4**

(22) Date de dépôt: **05.05.80**

(51) Int. Cl.³: **G 01 B 11/02,** G 01 B 11/06,
G 01 B 11/24

(30) Priorité: **08.05.79 BE 46826**

(71) Demandeur: **CENTRE DE RECHERCHES METALLURGIQUES CENTRUM VOOR RESEARCH IN DE METALLURGIE Association san but lucratif, Vereniging zonder winstoogmerk Rue Montoyer, 47, B-1040 Bruxelles (BE)**

(43) Date de publication de la demande: **10.12.80**
**Bulletin 80/25**

(72) Inventeur: **Pirelet, Robert Alfred, 32, Avenue des Lauriers, B-4920 Embourg (BE)**

(74) Mandataire: **Pirmolin, Guy Jean et al, CENTRE DE RECHERCHES METALLURGIQUES 11, rue Ernest Solvay, B-4000 Liege (BE)**

(84) Etats contractants désignés: **AT DE FR GB IT LU SE**

(54) Procédé pour contrôler les dimensions de la section transversale des poutrelles.

(57) Procédé pour contrôler les dimensions de la section transversale des poutrelles, notamment en cours de laminage, par l'intermédiaire du coefficient de dissymétrie calculé au moyen des mesures des cotes du bord supérieur de la semelle, de la face supérieure de l'âme au voisinage du congé de raccordement avec la semelle et du bord inférieur de la semelle, à chacune des deux extrémités de l'âme. La mesure relative à la face supérieure de l'âme est effectuée par une triangulation au moyen d'un télémètre optique (9–13) situé au-dessus de la poutrelle. La mesure relative aux bords supérieur (23) et inférieur (17) de la semelle est effectuée par deux triangulations au moyen chacune d'une lampe (30; 29) servant de référence lumineuse intense derrière la poutrelle et d'un récepteur (28; 27) capable de détecter l'emplacement de l'image de la transition entre la zone éclairée et la zone d'ombre.

- 1 -

C 1951E/8005.

CENTRE DE RECHERCHES METALLURGIQUES -
CENTRUM VOOR RESEARCH IN DE METALLURGIE
Association sans but lucratif -
Vereniging zonder winstoogmerk,
BRUXELLES, (Belgique).

## Procédé pour contrôler les dimensions de la section transversale des poutrelles

La présente invention est relative à un procédé pour contrôler les dimensions de la section transversale des poutrelles, et notamment les dimensions telles que les largeurs d'ailes des poutrelles en I, en particulier à la sortie des laminoirs.

Il existe de nombreux procédés optiques permettant de mesurer les dimensions des objets et en particulier les dimensions de la section transversale des profilés, par l'intermédiaire de mesures de distances et généralement d'angles associés à ces distances. Les procédés de ce type impliquent le balayage de la section par le champ d'émission sous l'action d'au moins un déflecteur animé d'un mouvement de rotation et/ou de translation.

Le demandeur a déjà préconisé par exemple un procédé dans lequel on envoie un rayonnement sur le profilé et l'on détecte, au moyen d'un récepteur, la partie du rayonnement retransmise par le profilé. La section transversale est scrutée au moyen d'un déflecteur rotatif et on maintient le faisceau retransmis dans le champ d'observation du récepteur en synchronisant l'orientation des axes émetteur et récepteur.

Les résultats obtenus avec de tels procédés se sont révélés très satisfaisants et on a pu ainsi contrôler non seulement la qualité du produit laminé, mais également la qualité du travail de laminage.

Il y a cependant toujours intérêt à augmenter la rapidité et la précision de ces mesures d'une part, pour des raisons d' ordre économique et d'autre part, pour des raisons d'efficacité du contrôle. En effet, les cadences de laminage sont de plus en plus élevées et pour contrôler les produits en cours de fabrication, il faut mesurer de plus en plus vite. De plus, si on veut mettre les produits à longueur, on a intérêt à répéter les mesures le plus fréquemment possible le long des produits, de façon à mieux localiser les endroits où l'on passe d'une dimension correcte à une dimension hors tolérance.

La présente invention a précisément pour objet un procédé permettant d'augmenter la vitesse et la précision de semblables mesures.

Cette invention est fondée sur les considérations suivantes.

La mesure de la dimension des largeurs d'ailes est utilisée par les spécialistes pour déterminer l'excentricité ou dissymétrie des poutrelles en I que l'on définit par la relation :

$$m = \frac{b_2 - b_1}{2}$$

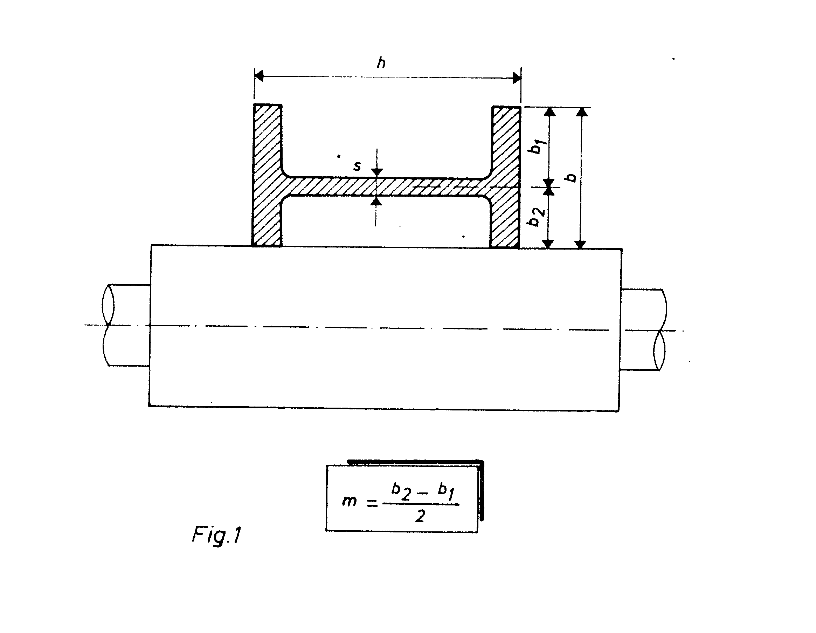

où $b_2$ et $b_1$ sont des largeurs d'ailes situées du même côté de l'âme (figure 1).

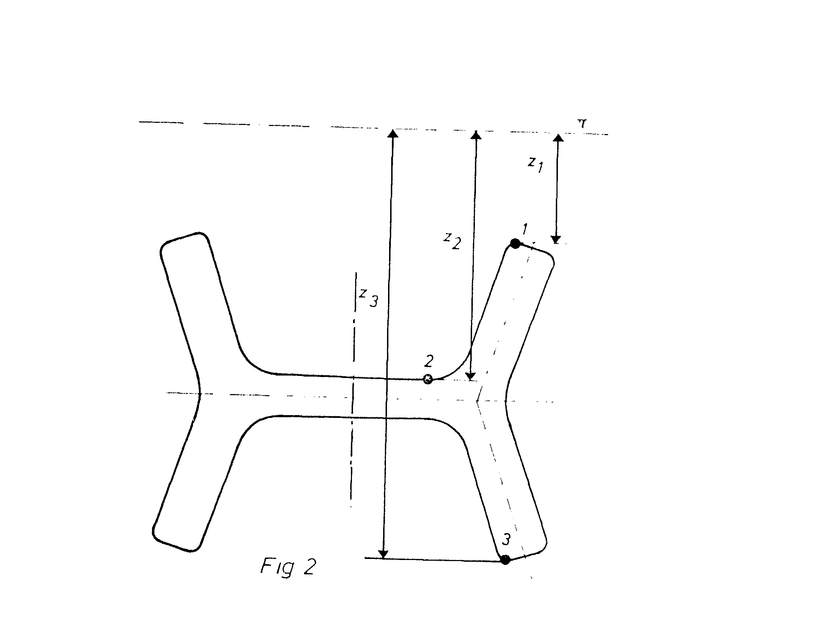

Cette relation peut se mettre sous la forme :
$$m = \frac{1}{2} (Z_3 - 2Z_2 + Z_1 - s)$$
où $Z_1$, $Z_2$ et $Z_3$ sont les cotes, par rapport à un plan horizontal de référence, des trois points caractéristiques de la mesure (bord supérieur de la semelle, face supérieure de l'âme au voisinage du congé de raccordement avec la semelle, bord inférieur de la semelle), s étant l'épaisseur de l'âme, connue à chaque passe (figure 2).

En conséquence, le procédé objet de la présente invention, dans lequel on contrôle les dimensions de la section transversale des poutrelles, notamment en cours de laminage, par l'intermédiaire du coefficient de dissymétrie calculé au moyen des mesures des cotes du bord supérieur de la semelle, de la face supérieure de l'âme au voisinage du congé de raccordement avec la semelle et du bord inférieur de la semelle, à chacune des deux extrémités de l'âme, est essentiellement caractérisé en ce que la mesure relative à la face supérieure de l'âme est effectuée par une triangulation au moyen d'un télémètre optique situé au-dessus de la poutrelle et en ce que la mesure relative aux bords supérieur et inférieur de la semelle est effectuée par deux triangulations au moyen chacune d'une lampe servant de référence lumineuse intense derrière la poutrelle et d'un récepteur capable de détecter l'emplacement de l'image de la transition entre la zone éclairée et la zone d'ombre.

Suivant une modalité de l'invention, on associe à chaque récepteur une optique dont on règle la position pour que l'image de la semelle ou de l'âme concernée se forme sur l'élément sensible du récepteur.

Suivant une autre modalité de l'invention, le faisceau

- 4 -

0020317

émetteur et l'axe optique du récepteur du télémètre sont sujets à des changements d'orientation quand on change de taille de poutrelles, afin que leur intersection reste située à proximité du congé de raccordement.

Suivant encore une autre modalité de l'invention, les axes optiques des triangulations relatives aux bords supérieur et inférieur de la semelle sont parallèles à la position théorique de l'âme de la poutrelle et l'axe inférieur est situé à une distance de l'ordre de 50 mm au-dessus de la table des rouleaux de support pour tenir compte des mouvements verticaux des poutrelles pendant leur transport.

Le faisceau émetteur du télémètre destiné à mesurer la face supérieure de l'âme des poutrelles est avantageusement, suivant l'invention, du type laser, en raison notamment de la facilité de filtrer la lumière retransmise.

Les lampes servant de références lumineuses intenses dans la mesure des bords supérieur et inférieur de la semelle des poutrelles sont avantageusement, suivant l'invention, des lampes à iode.

Les récepteurs sont de préférence des caméras à réseau de photodiodes, mais ils peuvent évidemment être constitués de caméras de télévision ou de cellules linéaires PIN à barrière Schottky.

Les avantages obtenus grâce à cette invention consistent essentiellement en ceci que la vitesse et la précision des mesures des dimensions de la section transversale des poutrelles sont augmentées avec pour conséquence une réduction des produits à rebuter et une plus grande efficacité du contrôle. En outre, elle reste applicable même si, en sus, des mouvements verticaux sur la table, la poutrelle subit une légère rotation (ou torsion) autour de son axe; un défaut

0020317

d'horizontalité de 2 % est admissible sans introduire de contrainte sur la vitesse de laminage.

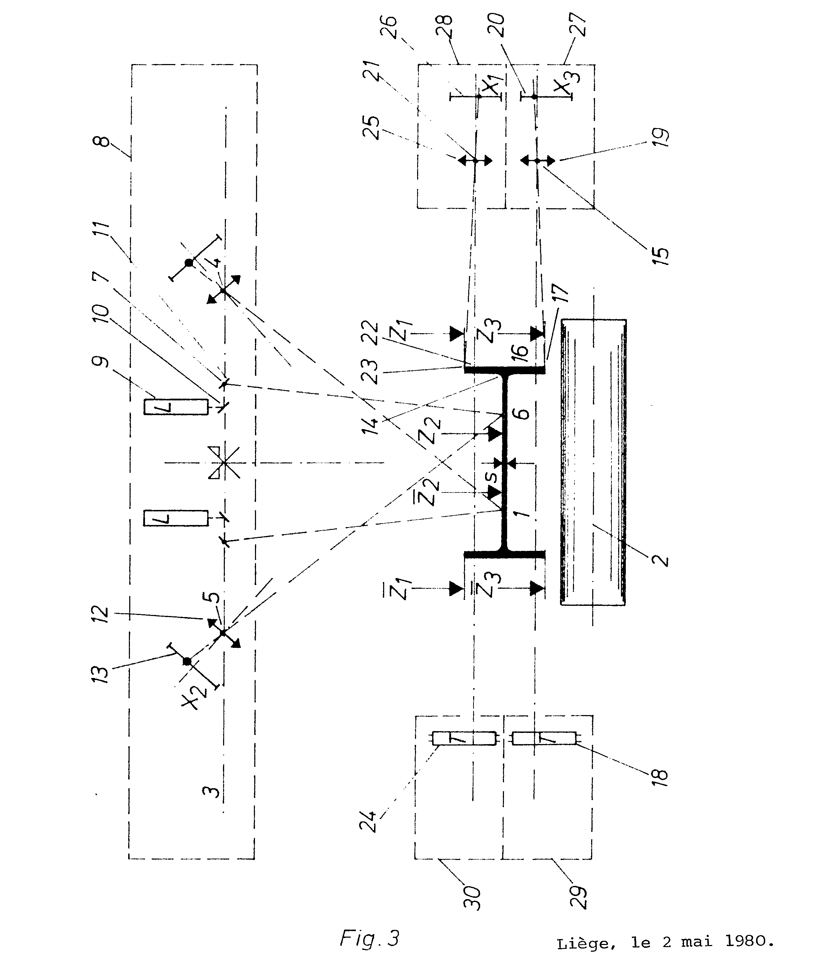

Dans ce qui suit, l'invention est exposée plus en détail à l'aide de la figure 3 représentant, à titre d'exemple non limitatif, un schéma optique de mesure de la dissymétrie des poutrelles I.

La poutrelle 1 dont on veut mesurer les dimensions par l'intermédiaire du coefficient de dissymétrie $m = \frac{1}{2}$ ($Z_3 - 2Z_2 + Z_1 - s$) est représentée dans la position théorique qu'elle est censée occuper sur la table des rouleaux de support 2 à la sortie du laminoir, où elle défile à une vitesse de 5 mètres/sec., alors que sa température est de l'ordre de 1100°C.

Les symboles $Z_3$, $Z_2$, $Z_1$ représentent diverses cotes par rapport au plan de référence 3 arbitrairement choisi comme plan horizontal comprenant la ligne des centres optiques 4 et 5 des deux triangulations à mettre en service au-dessus des poutrelles. Ces symboles correspondent respectivement à :

$Z_3$ : bord **inférieur** de la semelle de la poutrelle 1

$Z_2$ : bord supérieur de l'âme de la poutrelle 1, au voisinage du congé de raccordement avec la semelle

$Z_1$ : bord supérieur de la semelle de la poutrelle 1.

Il existe un coefficient de dissymétrie m relatif à une extrémité de la poutrelle ($Z_3$, $Z_2$, $Z_1$) et un coefficient $\bar{m}$ relatif à l'autre extrémité ($\bar{Z}_3$, $\bar{Z}_2$, $\bar{Z}_1$).

Le symbole s correspond à l'épaisseur de l'âme de la poutrelle 1; cette épaisseur est connue à chaque passe par le programme de laminage.

La mesure relative à la face supérieure de l'âme $Z_2$, est effectuée par une triangulation 5,6, 7 au moyen d'un télémètre optique disposé dans une gaine 8 située au-dessus de la poutrelle 1. Ce télémètre comprend un émetteur laser 9, deux
déflecteurs 10 et 11, une optique standard 12 et une caméra
13 à réseau de photodiodes. On règle la position de l'optique 12 pour que l'image de l'âme 6 se forme $(x_2)$ sur le réseau de photodiodes du récepteur 13. Il est à noter que le
faisceau émetteur 7, 6 et l'axe optique 5, 6 du télémètre
peuvent subir des changements d'orientation quand on change
de taille de poutrelles, afin que leur intersection 6 reste
située à proximité du congé de raccordement 14.

Etant donné qu'il existe une deuxième mesure, $\overline{Z}_2$, on utilise
également une deuxième triangulation et un deuxième télémètre optique disposé symétriquement dans la gaine 8 par rapport au premier télémètre mentionné ci-dessus.

La mesure relative au bord inférieur de la semelle $Z_3$ est
effectuée par une triangulation 15, 16, 17 au moyen d'une
lampe à iode 18, d'une optique standard 19 et d'une caméra
20 à réseau de photodiodes. La lampe 18 sert de référence
lumineuse très intense derrière la poutrelle 1 et la caméra
20 est destinée à détecter l'emplacement $(x_3)$ de l'image de
la transition entre la zone éclairée et la zone d'ombre. On
règle la position de l'optique 19 pour que l'image de la
transition entre zones éclairée et sombre se forme $(x_3)$ sur
le réseau de photodiodes du récepteur 20.

La mesure relative au bord supérieur de la semelle $Z_1$ est
effectuée également par une triangulation 21, 22, 23 au
moyen d'une lampe à iode 24, d'une optique 25 et d'une caméra 26 à réseau de photodiodes, destinée à détecter l'emplacement $(x_1)$ de l'image de la transition entre la zone
éclairée et la zone d'ombre.

Les axes optiques 15, 16 et 21, 22 des triangulations relatives aux bords supérieur et inférieur de la semelle sont parallèles à la position de l'âme de la poutrelle et l'axe inférieur 15, 16 est situé à une distance de 50 mm au-dessus de la table des rouleaux de support 2 pour tenir compte des mouvements verticaux des poutrelles pendant leur transport.

Etant donné qu'il existe une deuxième mesure $\overline{Z}_3$ et une deuxième mesure $\overline{Z}_1$, on utilise également deux autres triangulations, avec deux autres lampes à iode, deux autres optiques et deux autres caméras à réseau de photodiodes, comme représenté sur la figure 3.

Quatre coffrets 27, 28, 29, 30 ont été installés le long du train de laminage, à raison de deux de chaque côté des poutrelles à contrôler, chacun contient une lampe à iode et une caméra à réseau de photodiodes visant la lampe située dans le coffret opposé.

Les essais effectués se sont révélés très satisfaisants et ont montré la nécessité de travailler à cadence élevée (400 à 500 Hz), en raison des mouvements transversaux des poutrelles en cours de laminage.

Liège, le 2 mai 1980.

Guy PIRMOLIN,

Revendications de brevet

1. Procédé pour contrôler les dimensions de la section transversale des poutrelles, notamment en cours de laminage, par l'intermédiaire du coefficient de dissymétrie calculé au moyen des mesures des cotes du bord supérieur de la semelle, de la face supérieure de l'âme au voisinage du congé de raccordement avec la semelle et du bord inférieur de la semelle, à chacune des deux extrémités de l'âme, caractérisé en ce que que la mesure relative à la face supérieure de l'âme est effectuée par une triangulation au moyen d'un télémètre optique situé au-dessus de la poutrelle et en ce que la mesure relative aux bords supérieur et inférieur de la semelle est effectuée par deux triangulations au moyen chacune d'une lampe servant de référence lumineuse intense derrière la poutrelle et d'un récepteur capable de détecter l'emplacement de l'image de la transition entre la zone éclairée et la zone d'ombre.

2. Procédé suivant la revendication 1, caractérisé en ce que l'on associe à chaque récepteur une optique dont on règle la position pour que l'image de la semelle ou de l'âme concernée se forme sur l'élément sensible du récepteur.

3. Procédé suivant l'une ou l'autre des revendications 1 et 2, caractérisé en ce que le faisceau émetteur et l'axe optique du récepteur du télémètre sont sujets à des changements d'orientation quand on change de taille de poutrelles.

4. Procédé suivant l'une ou l'autre des revendications 1 à 3, caractérisé en ce que les axes optiques des triangulations relatives aux bords supérieur et inférieur de la semelle sont parallèles à la position théorique de l'âme de la poutrelle et l'axe inférieur est situé à une distance de l' ordre de 50 mm au-dessus de la table des rouleaux de support.

5. Procédé suivant l'une ou l'autre des revendications 1 à 4, caractérisé en ce que le faisceau émetteur du télémètre destiné à mesurer la face supérieure de l'âme des poutrelles est du type laser.

6. Procédé suivant l'une ou l'autre des revendications 1 à 5, caractérisé en ce que les lampes servant de références lumineuses intenses dans la mesure des bords supérieur et inférieur de la semelle des poutrelles sont des lampes à iode.

7. Procédé suivant l'une ou l'autre des revendications 1 à 6, caractérisé en ce que les récepteurs sont des caméras à réseau de photodiodes.

$$m = \frac{b_2 - b_1}{2}$$

*Fig.1*

Liège, le 2 mai 1980.

Guy PIRMOLIN,

Fig 2

Liège, le 2 mai 1980.

Guy PIRMOLIN,

0020317

Fig. 3

Liège, le 2 mai 1980.

Guy PIRMOLIN,

| DOCUMENTS CONSIDERES COMME PERTINENTS | | | CLASSEMENT DE LA DEMANDE (Int. Cl.) |
|---|---|---|---|
| Catégorie | Citation du document avec indication, en cas de besoin, des parties pertinentes | Revendica-tion concernée | |
| X | US - A - 4 040 738 (H.A. WAGNER)<br>* Titre; figures 1,2,3,4,6,7; colonne 3, ligne 15 - colonne 4, ligne 56; colonne 4, ligne 66 - colonne 5, ligne 9; colonne 5, ligne 39 - colonne 6, ligne 2 *<br><br>-- | 1-3, 5,7 | G 01 B 11/02<br>G 01 B 11/06<br>G 01 B 11/24 |
| X | FR - A - 2 308 085 (BETRIEBSFOR-SCHUNGSINSTITUT VDEH INSTITUT FUR ANGEWANDTE FORSCHUNG G.M.B.H.)<br>* Figures 1,3; page 5, lignes 21-40; page 3, lignes 15-26 *<br><br>-- | 1,2,7 | **DOMAINES TECHNIQUES RECHERCHES (Int. Cl.)**<br><br>G 01 B 11/02<br>       11/06<br>       11/24<br>G 01 C  7/00<br>        7/02<br>        7/06 |
| X | US - A - 3 633 010 (O.SVETLICHNY)<br>* Titre; figures 1,2,3,5,6,7b; colonne 2, ligne 20 - colonne 5, ligne 2, colonne 6, lignes 1-61 *<br><br>-- | 1,3,5 | |
| X | US - A - 3 612 890 (W.S. CORNYN JR et al.)<br>* Figures 1,4,5; colonne 3, ligne 1 - colonne 4, ligne 22; colonne 6, ligne 65 - colonne 7, ligne 50 *<br><br>---- | 1,2 | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |

Le présent rapport de recherche a été établi pour toutes les revendications

| Lieu de la recherche | Date d'achèvement de la recherche | Examinateur |
|---|---|---|
| La Haye | 01-09-1980 | VISSER |

OEB Form 1503.1  06.78